# EUROPÄISCHE PATENTSCHRIFT

(11) **EP 1 493 524 B1**
(45) Veröffentlichungstag und Bekanntmachung des Hinweises auf die Patenterteilung: **05.11.2008**
(21) Anmeldenummer: 04014383.6
(22) Anmeldetag: 17.06.2004
(51) Int. Cl.: B23K 3/06

(54) **Einrichtung zum Benetzen von Kabelenden**
Apparatus for wetting the wire ends
Appareil de mouillage d'extrémités de câbles

(30) Priorität: 03.07.2003 EP 03405496
(43) Veröffentlichungstag der Anmeldung: 05.01.2005
(73) Patentinhaber: Komax Holding AG, 6036 Dierikon (CH)
(72) Erfinder: Meisser, Claudio, Dipl. Ing. ETH, 6330 Cham (CH); Britschgi, Georges, 6055 Alpnach-Dorf (DE)
(74) Vertreter: Gaussmann, Andreas

(56) Entgegenhaltungen:
- DE-B- 2 844 236
- US-A- 3 765 591
- US-A- 4 011 980
- US-A- 4 873 938

## Beschreibung

Die Erfindung betrifft eine Einrichtung zum Benetzen von Kabelenden, bestehend aus einer an einem Ständer angeordneten Fördereinheit und aus einem Badbehälter mit Benetzungsmittel, wobei die in den Badbehälter einsetzbare bzw. vom Badbehälter entfernbare Fördereinheit das im Badbehälter vorrätig gehaltene Benetzungsmittel zum Kabelende fördert.

Aus der Patentschrift DE 28 44 236 ist ein Zinnbad mit Lötwellenüberfluss bekannt geworden, wobei abisolierte Leiterenden in der überfliessenden Lötwelle verzinnt werden. Flüssiges Zinn wird in einem Schacht mittels Pumpe über den Badspiegel hochgedrückt. Am Ende des Schachtes ist eine Düse angeordnet, über die das Zinn überfliesst und die Lötwelle bildet. Das überfliessende Zinn gelangt in das Bad zurück. Mittels Greifer gefasste, abisolierte Kabelenden werden in die Lötwelle eingetaucht, wobei die Kabellitzen durch das Zinn erwärmt werden und das Zinn die Kabellitzen benetzt bzw. in die Kabellitzen eindringt.

Ein Nachteil der bekannten Einrichtung liegt darin, dass der Schacht fest mit dem Badbehälter verbunden ist. Die Reinigung der Zinnbadoberfläche bzw. des Badspiegels wird dadurch erschwert.

Mit der US 4 011 980 ist eine Einrichtung zum Löten von Leiterplatten gemäß dem Oberbegriff des Anspruchs 1 bekannt geworden. Eine Pumpeneinheit fördert das Lötmittel vom Lötbad in einen höher gelegenen Behälter, der das Lötmittel mittels einer Düse als flacher, breiter Strom auf eine zum Lötbad hin geneigte Rampe leitet, wobei die zu lötende Leiterplatte Teil der Rampe ist. Der Lötmittelstrom fliesst über die Leiterplatte und benetzt die lötfähigen Kontakte der Leiterplatte mit Lötmittel.

Hier will die Erfindung Abhilfe schaffen. Die Erfindung, wie sie in Anspruch 1 gekennzeichnet ist, löst die Aufgabe, die Nachteile der bekannten Einrichtungen zu vermeiden und eine Einrichtung zum Benetzen von Kabelenden zu schaffen, die leicht zu handhaben ist.

Vorteilhafte Weiterbildungen der Erfindung sind in den abhängigen Patentansprüchen angegeben.

Die durch die Erfindung erreichten Vorteile sind im wesentlichen darin zu sehen, dass die für die Förderung des Mittels zum Benetzen der Kabelenden notwendigen Teile leicht einbaubar bzw. ausbaubar sind. Förderrohr, Pumpe Düse und Antrieb bilden eine Einheit, die werkzeuglos in den Badbehälter einsetzbar bzw. entfernbar ist. Ausserdem wird das überschüssige Benetzungsmittel seitlich an der Düse abgeführt und in das Bad zurückgeleitet. Die Düse kann dadurch näher an der Frontwand des Badbehälters angeordnet werden, wodurch kürzere Kabellängen dem Benetzungsprozess unterzogen werden können. Zum Aufheizen des Bades und Halten der Badtemperatur ist der Badbehälter üblicherweise mit einer Bodenheizung versehen. Das Bad wird von unten nach oben aufgeheizt, was zur Folge hat, dass an der Badoberfläche explosionsartige Spritzer entstehen können. Mit der erfindungsgemässen Einrichtung können die überraschend auftretenden Spritzer vermieden werden. Dazu weist der Badbehälter mindestens eine geneigte, heizbare Wand auf, die vom Behälterboden aus ansteigt.

Anhand der beiliegenden Figuren wird die vorliegende Erfindung näher erläutert.

Es zeigen:
Fig. 1
   eine erfindungsgemässe Einrichtung zum Benetzen von Kabelenden,
Fig. 2
   einen Badbehälter und eine Fördereinheit zum Fördern eines Benetzungsmittels,
Fig. 3
   die Fördereinheit,
Fig. 4
   einen Schnitt durch die Fördereinheit und den Badbehälter,
Fig. 5 und Fig. 6
   Einzelheiten einer Düse der Fördereinheit und
Fig. 7
   Einzelheiten einer Blende der Düse.

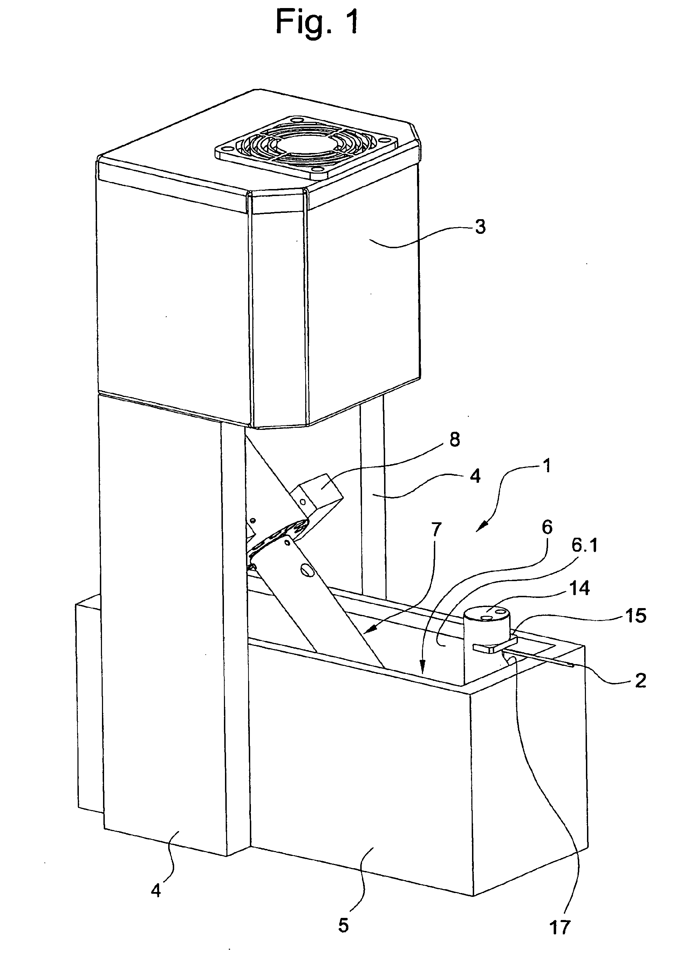

Fig. 1 zeigt eine erfindungsgemässe Einrichtung 1 zum Benetzen von Kabelenden 2. Die Einrichtung 1 besteht aus einem eine Steuerung 3 tragenden Ständer 4, einem Badbeälter 5 mit einem Bad 6 und aus einer Fördereinheit 7 zur Förderung eines das Bad 6 bildenden Benetzungsmittels zum Kabelende 2. Mit 6.1 ist der Badspiegel bezeichnet. Als Benetzungsmittel kann beispielsweise Lötzinn (mit oder ohne Blei) vorgesehen sein. Die Verwendung anderer Benetzungsmittel ist auch denkbar.

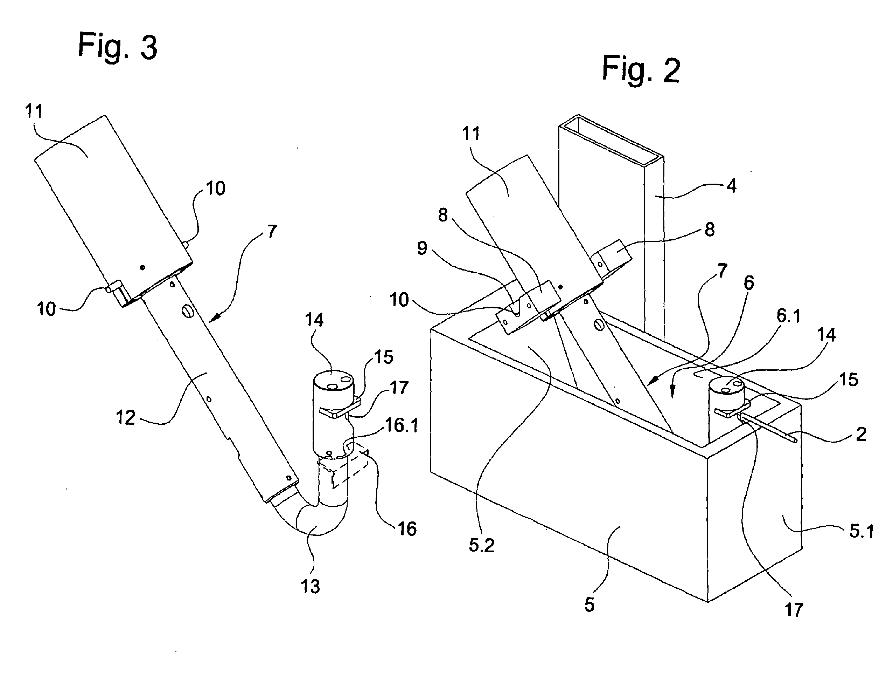

Fig. 2 zeigt den Badbehälter 5 und die Fördereinheit 7 zum Fördern des Benetzungsmittels. Die Fördereinheit 7 wird getragen von am Ständer 4 angeordneten Trägern 8. Je Träger 8 ist eine V-förmige Aussparung 9 vorgesehen, in die ein Stützstift 10 der Fördereinheit 7 passt.

Fig. 3 zeigt die Fördereinheit 7 bestehend aus Antrieb 11, Pumpeneinheit 12, Förderrohr 13 und Düse 14 mit Blende 15. Die Fördereinheit 7 ist gelagert an den beiden Stützstiften 10 und an einer winkelförmigen Auflage 16 mit einer kreisförmigen Ausnehmung 16.1. Die Auflage 16 ist an der Innenseite der Frontwand 5.1 des Badbehälters 5 angeordnet und positioniert die Düse 14 zentrisch und in der Höhe. Mittels der Träger 8, der Stützstifte 10 und mittels der Auflage 16 ist die Fördereinheit 7 werkzeuglos in den Badbehälter 5 einsetzbar bzw. entfernbar.

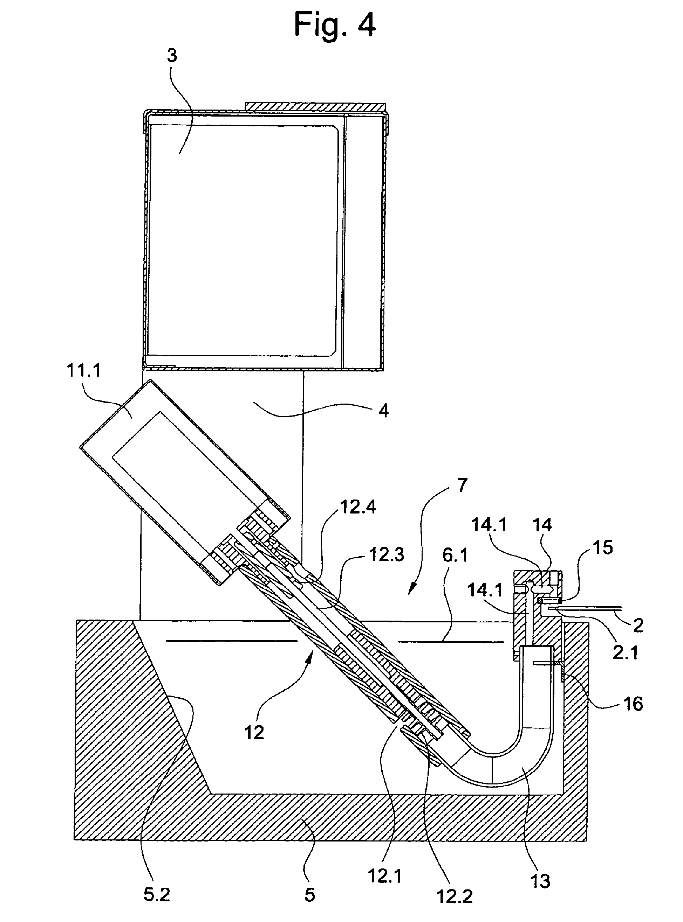

Fig. 4 zeigt einen Längsschnitt durch die Fördereinheit 7 und den Badbehälter 5. Der Badbehälter 5 ist mit einer schräg abfallenden Rückwand 5.2 versehen, die beheizbar ist. Dadurch wird das Bad 6 nicht nur von unten nach oben aufgeheizt sondern mindestens teilweise auch an der Oberfläche. Mindestens eine Seitenwand des Badbehälters 5 kann auch beheizbar und schräg abfallend sein.

Die Pumpeneinheit 12 ist mit einer Eintrittsöffnung 12.1 versehen, durch die das Benetzungsmittel zu einem Pumpenrad 12.2 gelangt. Das Pumpenrad 12.2 wird mittels einer Welle 12.3 angetrieben, die thermisch isoliert (Kupplung 12.4) mit einem Antriebsmotor 11.1 verbunden ist. Das Pumpenrad 12.2 fördert das Benetzungsmittel durch das Förderrohr 13 zur Düse 14, wobei das Benetzungsmittel durch Bohrungen 14.1 zur auswechselbaren Blende 15 fliesst, die Form und Grösse des freien Strahls des Benetzungsmittels bestimmt. Das abisolierte Kabelende 2.1 wird in den freien Strahl des Benetzungsmittels gebracht, wobei der Kabelleiter bzw. die Kabellitzen durch das Benetzungsmittel erwärmt werden und das Benetzungsmittel den Kabelleiter bzw. die Kabellitzen benetzt bzw. in die Kabellitzen eindringt. Bei der Verwendung von Lötzinn als Benetzungsmittel wird der beispielsweise aus Kupfer bestehende Kabelleiter bzw. die beispielsweise aus Kupfer bestehenden Litzen verzinnt. Das überschüssige Benetzungsmittel fliesst seitlich der Düse 14 ab und zurück in den Badbehälter 5. Die Zuführung der abisolierten Kabelenden 2.1 kann manuell oder automatisch mittels Greifer erfolgen.

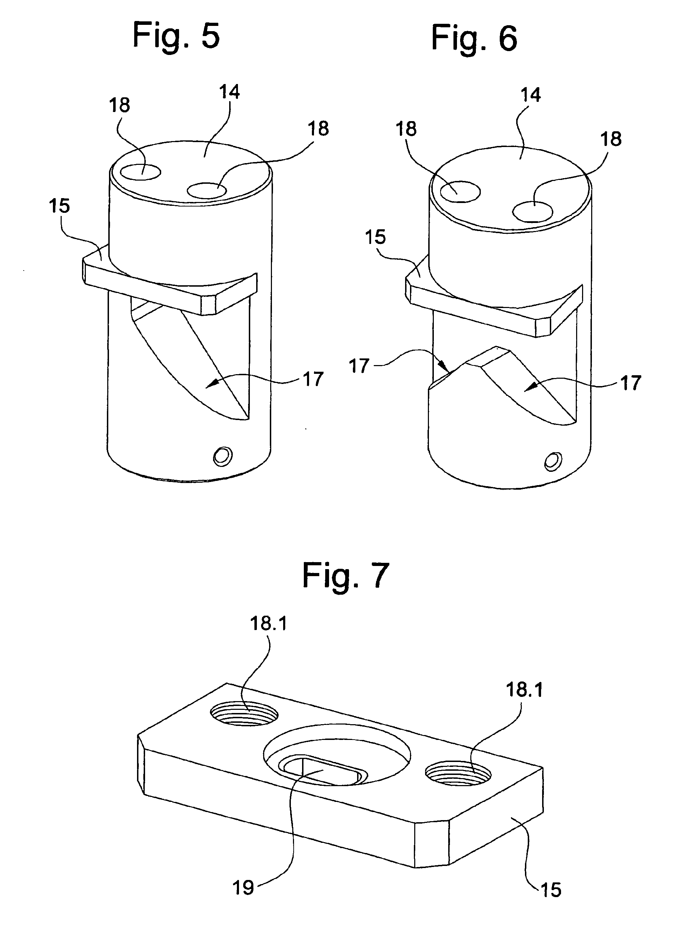

Fig. 5 und Fig. 6 zeigen Einzelheiten der Düse 14, wobei Fig. 5 eine Düse 14 mit einem seitlichen Ablauf 17 und Fig. 6 eine Düse mit zwei seitlichen Abläufen 17 zeigen. Der Ablauf 17 entsteht durch einen Ausschnitt in der zylinderförmigen Düse 14 unterhalb der Blende 15. Bei der Düse 14 gemäss Fig. 5 wird das Kabelende 2 mit einer linearen Bewegung dem freien Strahl des Benetzungsmittels zugeführt. Bei der Düse 14 gemäss Fig. 6 kann das Kabelende 2 mit einer Schwenkbewegung dem freien Strahl des Benetzungsmittels zugeführt werden.

Fig. 7 zeigt Einzelheiten der Blende 15, die mittels Schrauben 18 mit der Düse 14 lösbar verbunden ist, wobei die Schrauben 18 in Gewindelöcher 18.1 der Blende 15 passen. Die Blende 15 ist mit einer Bohrung 19 versehen, durch die das Benetzungsmittel fliesst. Grösse und Form der Bohrung können je nach gewünschtem freiem Strahl variieren.

## Patentansprüche

1. Einrichtung (1) zum Benetzen von Kabelenden (2), bestehend aus einer an einem Ständer (4) angeordneten Fördereinheit (7) und aus einem Badbehälter (5) mit Benetzungsmittel, wobei die in den Badbehälter (5) einsetzbare bzw. vom Badbehälter (5) entfernbare Fördereinheit (7) das im Badbehälter (5) vorrätig gehaltene Benetzungsmittel zum Kabelende (2) fördert,
**dadurch gekennzeichnet,**
**dass** die Fördereinheit (7) werkzeuglos einsetzbar bzw. entfernbar ist und die Fördereinheit (7) von am Ständer (4) angeordneten Trägern (8) und von einer an einer Frontwand (5.1) des Badbehälters (5) angeordneten Auflage (16) getragen wird, wobei Stützstifte (10) der Fördereinheit (7) in Aussparungen (9) der Träger (8) gehalten werden.

2. Einrichtung nach Anspruch 1,
**dadurch gekennzeichnet,**
**dass** die Fördereinheit (7) einen Antrieb (11), eine Pumpeneinheit (12), ein Förderrohr (13) und eine Düse (14) aufweist, wobei ein Pumpenrad (12.2) das Benetzungsmittel vom Badbehälter (5) über das Förderrohr (13) zur Düse (14) fördert.

3. Einrichtung nach Anspruch 2,
**dadurch gekennzeichnet,**
**dass** die Düse (14) mit einer auswechselbaren Blende (15) versehen ist, deren Bohrung (19) die Form und Grösse des freien Strahls des Benetzungsmittels bestimmt.

4. Einrichtung nach Anspruch 3,
**dadurch gekennzeichnet,**
**dass** die Düse (14) mindestens einen seitlichen Ablauf (17) aufweist, über den das überschüssige Benetzungsmittel abfliesst.

5. Einrichtung nach einem der vorhergehenden Ansprüche,
**dadurch gekennzeichnet,**
**dass** der Badbehälter (5) mindestens eine schräg abfallende, beheizbare Wand (5.2) aufweist.

## Claims

1. Apparatus (1) for wetting wire-ends (2) consisting of a conveying unit (7) arranged on a stand (4) and of a bath-container (5) with wetting agent, the conveyer unit (7) that is installable in the bath container (5) and removable from the bath container (5) conveying the wetting agent stored in the bath-container (5) to the wire-end (2),
**characterized in that**
the conveyor unit (7) can be installed without the use of tools, and **in that**
the conveyor unit (7) is borne by supports (8) arranged on the stand (4) and by a rest (16) arranged on a front wall (5.1) of the bath-container (5), supporting pins (10) of the conveyor unit (7) being held in openings (9) of the supports (8).

2. Apparatus according to Claim 1,
**characterized in that**
the conveyor unit (7) has a drive (11), a pump unit (12), a conveyor pipe (13), and a nozzle (14), a pump-screw (12.2) conveying the wetting agent from the bath-container (5) through the conveyor pipe (13) to the nozzle (14).

3. Apparatus according to Claim 2,
**characterized in that**
the nozzle (14) is provided with an exchangeable throttle (15) whose drilled hole (19) determines the shape and size of the free jet of the wetting agent.

4. Apparatus according to Claim 3,
**characterized in that**
the nozzle (14) has at least one lateral drain (17) via which the surplus wetting agent drains off.

5. Apparatus according to one of the preceding claims
**characterized in that**
the bath-container (5) has at least one downward sloping heatable wall (5.2).

## Revendications

1. Dispositif (1) pour mouiller des extrémités de câbles (2), composé d'une unité d'alimentation (7) disposée sur un montant (4) et d'un récipient de bain (5) contenant un agent de mouillage, l'unité d'alimentation (7) apte à être placée dans le récipient (5) et apte à être enlevée de celui-ci amenant jusqu'à l'extrémité de câble (2) l'agent de mouillage stocké dans le récipient (5),
**caractérisé en ce que** l'unité d'alimentation (7) peut être mise en place et enlevée sans outil, et l'unité d'alimentation (7) est portée par des supports (8) qui sont disposés sur le montant (4) et par un élément d'appui (16) disposé sur une paroi frontale (5.1) du récipient de bain (5), des tiges d'appui (10) de l'unité d'alimentation (7) étant fixées dans des creux (9) des supports (8).

2. Dispositif selon la revendication 1, **caractérisé en ce que** l'unité d'alimentation (7) comporte un entraînement (11), une unité de pompage (12), un tube d'alimentation (13) et un injecteur (14), une roue de pompe (12.2) amenant l'agent de mouillage du récipient de bain (5) jusqu'à l'injecteur (14), par l'intermédiaire du tube d'alimentation (13).

3. Dispositif selon la revendication 2, **caractérisé en ce que** l'injecteur (14) est pourvu d'un diaphragme remplaçable (15) dont le perçage (19) définit la forme et la taille du jet libre d'agent de mouillage.

4. Dispositif selon la revendication 3, **caractérisé en ce que** l'injecteur (14) présente au moins un conduit d'écoulement latéral (17) par lequel s'écoule l'excédent d'agent de mouillage.

5. Dispositif selon l'une des revendications précédentes, **caractérisé en ce que** le récipient de bain (5) comporte au moins une paroi inclinée (5.2) apte à être chauffée.
